# EUROPÄISCHE PATENTSCHRIFT

(11) **EP 4 121 681 B1**
(45) Veröffentlichungstag und Bekanntmachung des Hinweises auf die Patenterteilung: **21.02.2024**
(21) Anmeldenummer: 21716591.9
(22) Anmeldetag: 17.03.2021
(51) Int. Cl.: F16L 37/098

(54) **FLUIDLEITUNGSKUPPLUNG**
FLUID LINE COUPLING
ACCOUPLEMENT DE CONDUITE DE FLUIDES

(30) Priorität: 18.03.2020 DE 102020203433
(43) Veröffentlichungstag der Anmeldung: 25.01.2023
(73) Patentinhaber: ContiTech Techno-Chemie GmbH, 61184 Karben (DE)
(72) Erfinder: KUHLHOFF, Florian, 30419 Hannover (DE); ELTAIEF, Amin, 30419 Hannover (DE)
(74) Vertreter: Continental Corporation
(86) Internationale Anmeldenummer: PCT/DE2021/200034
(87) Internationale Veröffentlichungsnummer: WO 2021/185419

(56) Entgegenhaltungen:
- DE-A1-102014 107 530
- DE-U1-202004 016 097
- US-B1- 6 283 443

## Beschreibung

Die Erfindung betrifft eine reversibel lösbare Fluidleitungskupplung, mindestens aufweisend eine Kupplungsmuffe, ein Verriegelungselement und einen Kupplungsstutzen mit einem Sperrbund.

Fluidleitungskupplungen der genannten Art sind in vielfacher Anwendung im Einsatz. Ein wichtiges Einsatzgebiet ist der Automobilbau. Dort werden häufig SAE-Kupplungen, d.h. Kupplungen mit standardisierten Steckergeometrien eingesetzt.

Derartige Kupplungen lassen sich durch die große Führungslänge des Steckers relativ sicher ineinanderstecken und verrasten. Es ist jedoch bei dieser Art der Kupplung nur schwer erkennbar, ob der Kupplungsstutzen auch richtig in der Kupplungsmuffe verrastet ist. Zwar lässt sich ein sicheres Verrasten mechanisch kontrollieren, das bedeutet jedoch einen erhöhten Aufwand in der Montage und ist auch nicht leicht automatisierbar. Die US 2017/0363237 A1 zeigt eine derartige Kupplung.

Darüber hinaus sind auch gattungsbildende Kupplungen bekannt, die eine optische Verrastungsanzeige aufweisen, so dass der korrekte Sitz des Kupplungsstutzens sichtbar ist. Die US 2016/0201835 A1 zeigt eine solche Kupplung. Hier sind jedoch zwei Verriegelungselemente notwendig, die ineinandergreifen müssen, was bei einer axialen Belastung, die beim Einstecken des Kupplungssteckers auftritt, zu einem Verkippen der Element führen kann, so dass eine Verrastung nicht erreicht wird. Zwar ist ein solches Versagen gemäß der offenbarten Ausführung sichtbar, aber nicht erwünscht.

In der US 2010/0276924 A1 ist ebenfalls eine Fluidleitungskupplung mit einer Anzeige des Verriegelungszustandes offenbart. Bei dem Gegenstand dieser Schrift ist zwar eine optische Anzeige in Form eines aus der Kupplung herausragenden Elementes vorhanden, dieses signalisiert jedoch nur, ob die Verriegelung betätigt wurde. Eine manuelle Nacharbeit ist hier in jedem Fall notwendig.

Die DE 20 2004 016097 U1 offenbart ein Rohrverbindungssystem mit einem Stecker und einer Buchse, wobei die Buchse aus einer Außenhülse und einer Innenhülse besteht. Die Innenhülse weist Haltemittel und Dichtmittel auf und ist gegenüber der Außenhülse in axialer Richtung zwischen einer geöffneten Position und eine den Stecker haltenden Position verschiebbar.

Der Erfindung lag die Aufgabe zugrunde, eine Fluidleitungskupplung der eingangs geschilderten Art zu schaffen, deren Verrastungszustand leicht automatisch kontrollierbar ist, wobei eine optische Kontrolle bevorzugt ist.

Diese Aufgabe wird dadurch gelöst, dass
- die Kupplungsmuffe einen von einer ersten, zum Einstecken des Kupplungsstutzens vorgesehene Einstecköffnung axial nach Außen weisenden, von der Einstecköffnung beabstandeten Anschlagbund aufweist,
- die Kupplungsmuffe in ihrer Außenwand eine vorbestimmte Anzahl an Öffnungen aufweist und
- das Verriegelungselement im Inneren der Kupplungsmuffe axial verschiebbar angeordnet ist und eine zur Anzahl der Öffnungen in der Kupplungsmuffe korrespondierende Anzahl an federnden Verriegelungsarmen aufweist,
- wobei die Verriegelungsarme auf dem Umfang des Verriegelungselementes verteilt sind und sich in axialer Richtung erstrecken und an ihren axialen Enden nach radial auswärts weisende Betätigungs/Signalflächen aufweisen und
- die Betätigungs/Signalflächen in Form und Lage mit den Öffnungen in der Kupplungsmuffe korrespondieren und federnd durch die Öffnungen der Kupplungsmuffe radial nach außen aus der Kupplungsmuffe heraus ragen,
- die Fluidleitungskupplung einen die Kupplungsmuffe umgreifenden Sperrring aufweist, wobei der Sperrring ein Basisteil, ein Federteil und ein Sperrteil aufweist und Basisteil und Sperrteil mittels des Federteils in axialer Richtung federnd veränderbar beabstandet sind und
- der Sperrring einen Innendurchmesser aufweist, der mit geringem Spiel über den Außenumfang der Kupplungsmuffe schiebbar ist,
- wobei das Spiel zwischen Kupplungsmuffe und Sperrteil so bemessen ist, dass das Sperrteil nicht über die aus den Öffnungen der Kupplungsmuffe herausragenden Betätigungs/Signalflächen schiebbar ist,
- die Betätigungs/Signalflächen eine von dem Sperrteil des Sperrrings abweichende Farbe aufweisen,
- wobei der Sperrring in vormontiertem Zustand so auf der Kupplungsmuffe angeordnet ist, dass sich das Basisteil an dem Anschlagbund der Kupplungsmuffe abstützt, das Sperrteil sich gegen die aus den Öffnungen der Kupplungsmuffe herausragenden Betätigungs/Signalflächen abstützt und das Federteil axial zusammengeschoben ist, wodurch zwischen Basisteil und Sperrteil eine axiale Federkraft wirksam ist und
- die Betätigungs/Signalflächen bei eingeschobenem und verriegeltem Kupplungsstutzen in Richtung auf das Innere der Kupplungsmuffe soweit verschoben sind, dass sie nicht mehr aus den Öffnungen der Kupplungsmuffe herausragen, aber noch durch die Wandung der Kupplungsmuffe an einem axialen Hinausgleiten aus der Kupplungsmuffe gehindert sind, so dass das Sperrteil des Sperrrings freigegeben ist und durch die Federkraft des Federteils des Sperrrings in Richtung auf die Einstecköffnung über die Betätigungs/Signalflächen hinweg verschoben ist, so dass die Betätigungs/Signalflächen nicht mehr sichtbar sind und auch nicht mehr aus den Öffnungen in der Kupplungsmuffe nach radial außen verschiebbar sind.

Eine Anordnung dieser Art ermöglicht es, den Verriegelungszustand einer gattungsgemäßen Kupplung optisch zu signalisieren. Nur bei verriegelter Kupplung sind die Betätigungs/Signalflächen in Richtung auf das Innere der Kupplungsmuffe verschoben und erst dann kann das Sperrteil über die Betätigungs/Signalflächen gleiten. Da die Betätigungs/Signalflächen eine abweichende Farbe aufweisen, lässt sich diese Veränderung problemlos mit einer Kamera auch aus beliebigen Blickwinkeln feststellen. Damit ist diese Kontrolle vollautomatisierbar.

In einer Weiterbildung der Erfindung weist der Übergang von den Verriegelungsarmen zu den radial auswärts gerichteten Betätigungs/Signalflächen mindestens teilweise eine Schräge auf.

Bei einer Axialverschiebung des Sperrrings in der Kupplungsmuffe in Richtung von der Einstecköffnung weg gleiten die Übergangsbereiche über die Kanten der Öffnungen der Kupplungsmuffe. Dabei ist durch den fließenden Übergang gewährleistet, dass bei der genannten Bewegung die Verriegelungsarme in das Innere der Kupplungsmuffe gedrückt werden, wobei auch die Betätigungs/Signalflächen nach innen gezogen werden.

In einer Weiterbildung der Erfindung weisen die Verriegelungsarme an ihren axialen Enden den Betätigungs/Signalflächen gegenüberliegend nach radial Innen weisende Sperrnasen auf.

Die Sperrnasen greifen bei einer axialen Verschiebung des Verriegelungselementes und damit verbundener Verschiebung der Enden der Verriegelungsarme nach innen über den Sperrbund des Kupplungsstutzens. Da sich die Betätigungs/Signalflächen noch an der Wand der Kupplungsmuffe axial abstützen, ist der Verbund aus Verriegelungselement und Kupplungsstutzen nicht mehr aus der Kupplungsmuffe herausziehbar. Erst bei manuell zurückgeschobenem Sperrteil des Sperrrings ist ein Auseinanderfedern der Verriegelungsarme wieder möglich, so dass die Kupplung wieder lösbar ist.

In einer Weiterbildung der Erfindung weist eine vorbestimmte Anzahl von Verriegelungsarmen an ihren Sperrnasen in axialer Richtung angeordnete Einschubhilfen in Form von Abschrägungen auf, und ragen diese Sperrnasen so weit radial in das Innere der Kupplungsmuffe, dass beim Einschieben des Kupplungsstutzens der Sperrbund gegen die Abschrägungen stößt und damit die Sperrnasen nach radial außen verschiebbar sind.

Da auf diese Weise beim Einschieben eines Kupplunsstutzens die Betätigungs/Signalflächen nach Außen verschoben werden müssen, ist die bei einer fehlerhaften Ausgangsstellung des Sperrteils des Sperrrings nicht möglich, so dass der Kupplungsstutzen nicht in die Kupplungsmuffe einschiebbar ist. Dies gewährleistet, dass die fehlerhafte Ausgangsstellung des Sperrteils nicht als korrekt verriegelte Kupplung falsch interpretiert wird.

In einer Weiterbildung der Erfindung weisen die Verriegelungsarme ohne Einschubhilfen an den radialen Enden ihrer Sperrnasen jeweils einen Führungssteg auf, der sich in axialer Richtung erstreckt.

Die Führungsstege sorgen für ein gerades Einführen des Kupplungsstutzens, damit dieser beim Einstecken nicht verkantet.

In einer Weiterbildung der Erfindung weist das Verriegelungselement im Inneren axial ausgerichtete Längsanschläge auf.

Die Mitnehmerstege dienen dazu, das Verriegelungselement beim Einstecken des Kupplungsstutzens in axialer Richtung von der Einstecköffnung der Kupplungsmuffe in die Kupplungsmuffe hinein sicher zu verschieben, um ein Einziehen der Betätigungs/Signalflächen sicher zu gewährleisten. Dabei schlägt der Sperrbund an die Mitnehmerstege und schiebt dadurch das Verriegelungselement vor sich her in die Kupplungsmuffe hinein.

In einer Weiterbildung der Erfindung weisen die Führungsstege aufweisenden Verriegelungsarme jeweils axial in Richtung auf die Einstecköffnung der Kupplung weisend, radial von den Führungsstegen beabstandet, Sperrnasen auf, wobei der Abstand zwischen jeweiligem Führungssteg und Sperrnase so bemessen ist, dass die Wand der Kupplungsmuffe im Bereich der Öffnungen zwischen Führungssteg und Sperrnase eingreifen kann.

Die Sperrnasen verhindern, dass sich die eingreifenden Verriegelungsarme beim Verschieben des Kupplungsstuzens nicht versehentlich leicht ins Innere des Kupplungsgehäuses eindrücken lassen, um zu vermeiden, dass der Sperring über die Signalflächen gleitet, obwohl kein Kupplungsstuzen eingesteckt ist.

In einer Weiterbildung der Erfindung sind alle Bauteile der Fluidleitungskupplung aus Kunststoff ausgebildet.

Die Bauteile einer erfindungsgemäßen Fluidleitungskupplung sind beispielsweise durch Spritzgießen leicht herstellbar. Kunststoff weist gute Federungseigenschaften auf und lässt sich leicht einfärben.

Anhand der Zeichnung wird nachstehend ein Ausführungsbeispiel der Erfindung näher erläutert.

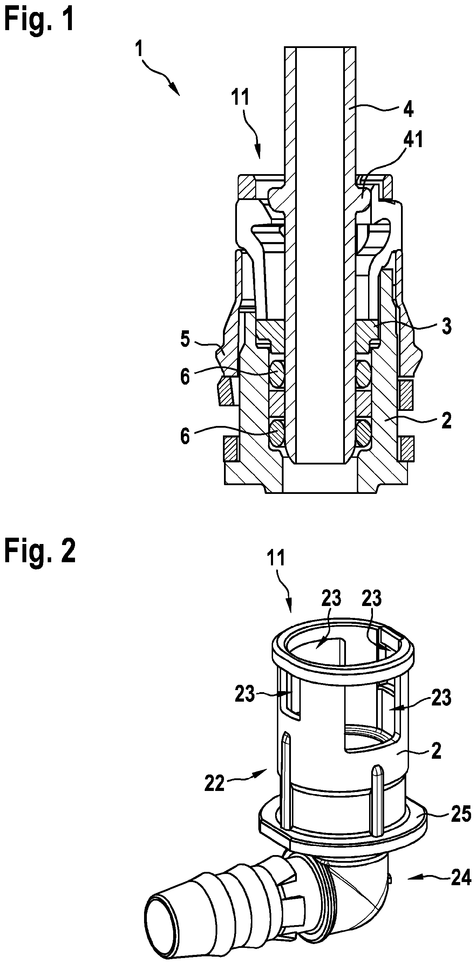

In der Fig. 1 ist eine erfindungsgemäße Fluidleitungskupplung 1 in einem Schnitt dargestellt. Die Kupplung 1 weist eine Kupplungsmuffe 2, ein Verriegelungselement 3, einen Kupplungsstutzen 4, einen Sperrring 5 und zwei Dichtungen 6 auf. Weiterhin weist die Kupplung eine Einstecköffnung 11 auf, die zum Einstecken des Kupplungsstutzens vorgesehen ist. Die O-Ring-Dichtungen 6 sorgen bei bei eingestecktem Kupplungsstutzen 4 für eine sichere Abdichtung zwischen Kupplungsmuffe 2 und Kupplungsstutzen 4. In dieser Darstellung ist der Kupplungsstutzen 4 in die Kupplungsmuffe eingesteckt, aber nicht verriegelt. Der Kupplungsstutzen 4 weist einen Sperrbund 41 auf.

Nachfolgend werden die Einzelteile der Kupplung 1 näher erläutert.

In Fig. 2 ist die Kupplungsmuffe 2 allein in einer perspektivischen Ansicht gezeigt. Die Kupplungsmuffe weist eine Wand 22 mit vier Öffnungen 23 auf. Der Einstecköffnung 11 gegenüber ist an der Kupplungsmuffe 2 ein Anschlussbereich 24 zum Verbinden mit einer hier nicht gezeigten weiteren Fluidleitung angeordnet. Im vorliegenden Beispiel ist der Anschlussbereich 24 um 90° abgewinkelt, kann aber in allen denkbaren Stellungen ausgerichtet sein. An dem dem Anschlussbereich 24 zugeordneten Ende der Kupplungsmuffe 3 ist ein radial nach Außen weisender Anschlagbund 25 angeordnet.

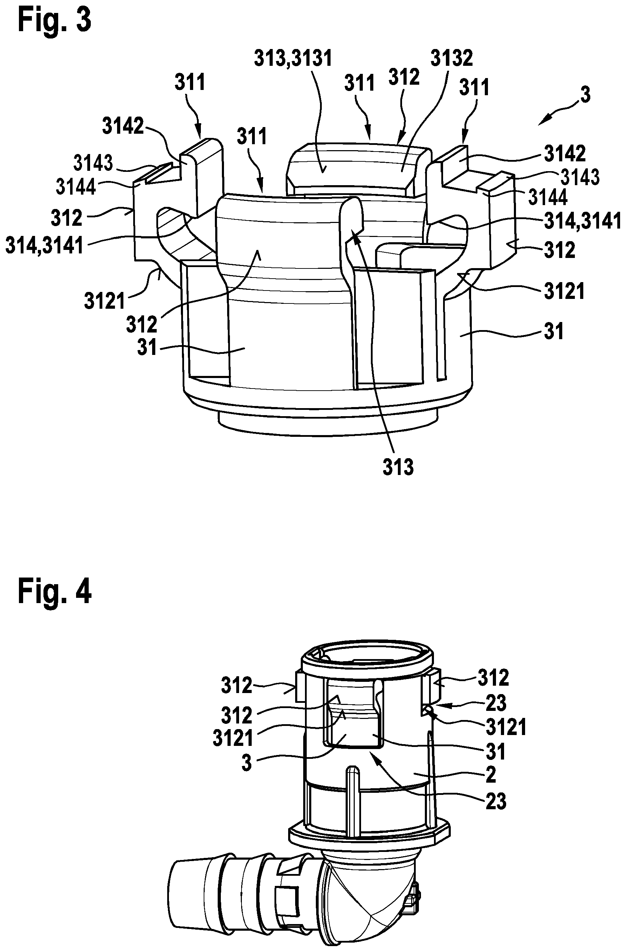

In Fig. 3 ist das Verriegelungselement 3 allein gezeigt. Das Verriegelungselement 3 weist vier Verriegelungsarme 31 auf. Die Verriegelungsarme 31 sind axial so ausgerichtet, dass ihre Enden 311 in Richtung auf die hier nicht gezeigte Einstecköffnung 11 der Kupplungsmuffe weisen. An jedem Ende 311 der Verriegelungsarme 31 ist jeweils eine Betätigungs/Signalfläche 312 angeordnet, die radial auswärts gerichtet ist und farblich von den anderen Bauteilen abweicht. Radial gegenüber den Betätigungs/Signalflächen 312 ist jeweils entweder eine Sperrnase 313 oder 314 angeordnet, die radial nach Innen in das Verriegelungselement 3 ragt. Dabei sind jeweils paarweise die Sperrnasen 313 weiter nach innen ragend als die ebenfalls paarweisen Sperrnasen 314. An den Sperrnasen 314 ist an ihren inneren Enden 3141 jeweils ein axial ausgerichteter Führungssteg 3142 angeordnet. Außerdem weisen die Sperrnasen 314 an ihren axialen Endflächen 3143 jeweils einen Sperrsteg 3144 auf.

Die Sperrnasen 314 verhindern, dass sich die eingreifenden Verriegelungsarme 31 beim Verschieben des Kupplungsstuzens 4 nicht versehentlich leicht ins Innere des Kupplungsgehäuses 2 eindrücken lassen, um zu vermeiden, dass der Sperring 5über die Signalflächen 312 gleitet, obwohl kein Kupplungsstuzen 4 eingesteckt ist.

Die Sperrnasen 313 weisen an ihren axialen Endflächen 3131 nach innen gerichtete Abschrägungen 3132 auf. Diese dienen als Einführhilfe für den hier nicht gezeigten Kupplungsstutzen.

Die Verriegelungsarme 31 weisen im Übergang vom Arm zur jeweiligen Betätigungs/Signalfläche 312 eine schräge Übergangsfläche 3121 auf.

In der Fig. 4 ist der Zusammenbau von Kupplugsmuffe 2 und Verriegelungselement 3 gezeigt. Das Verriegelungselement 3 ist in das Innere der Kupplungsmuffe 2 eingesteckt, was durch ein elastisches Einfedern der Verriegelungsarme 31 möglich ist. Das Einfedern wird erleichtert durch die schrägen Übergangsflächen 3121, die beim Einschieben des Verriegelungselements 2 über den Rand der Einstecköffnung 11 gleiten und die Verriegelungsarme nach Innen drücken.

In der gezeigten Position ragen die Betätigungs/Signalflächen 312 durch die Öffnungen 23 der Kupplungsmuffe, da die Verriegelungsarme 31 in ihre Ausgangslage nach außen zurückgefedert sind.

In der Fig. 5 ist der Sperrring 5 allein in seiner Ausgangsposition gezeigt. Der Sperrring weist ein Basisteil 51, ein Federteil 52 und ein Sperrteil 53 auf, wobei Basisteil 51 und Sperrteil 53 mittels des Federteils 52 in axialer Richtung federnd veränderbar beabstandet sind.

Fig. 6 zeigt die erfindungsgemäße Fluidleitungskupplung 1 in dem Zustand, wie er auch in Fig. 1 dargestellt ist, als Längsschnitt.

Der Sperrring 5 ist über die Kupplungsmuffe 3 und die Betätigungs/Signalflächen 312 gestülpt, wobei die Betätigungs/Signalflächen 312 beim Aufschieben nach Innen federn konnten. Dieser Schritt ist nur bei nicht eingestecktem Kupplungsstutzen möglich. Das Basisteil 51 stützt sich nun gegen den Anschlagbund 25 der Kupplungsmuffe 2 ab. Beim Aufschieben des Sperrrings 5 ist das Sperrteil 53 in Richtung auf das Basisteil 51 des Sperrrings 5 zusammenschiebbar, so dass sich in der gezeigten Position die Betätigungs/Signalflächen 312 wieder in ihrer Ausgangsposition befinden. Das Sperrteil 53 des Sperrrings 5 stützt sich nun axial gegen die nach Außen durch die Öffnungen 23 der Kupplungsmuffe 2 ragenden Betätigungs/Signalflächen 312 ab, so dass es nicht axial über die Betätigungs/Signalflächen 312 gleiten kann. Der Kupplungsstutzen 4 ist eingesteckt aber noch nicht verriegelt und ragt ins Innere der Kupplungsmuffe axial bis durch die Dichtungen 6 hindurch. Er wird dabei durch den Sperrbund 41 und die Führungsstege 3142 der Sperrnasen 314 radial geführt. Dadurch, dass die Sperrnasen 314 nicht so weit in das Innere der Kupplungsmuffe ragen, passt der Sperrbund 41 mit geringem Spiel zwischen den Führungsstegen 3142 hindurch.

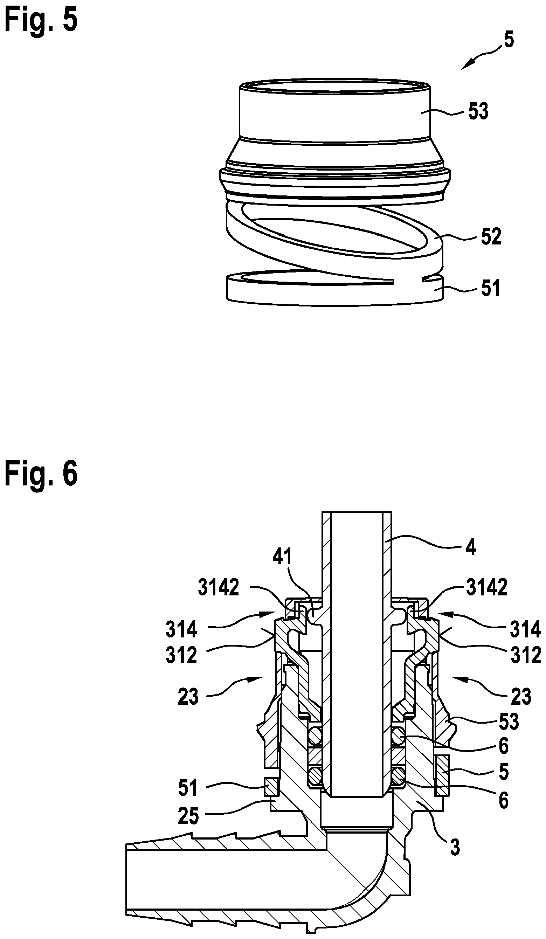

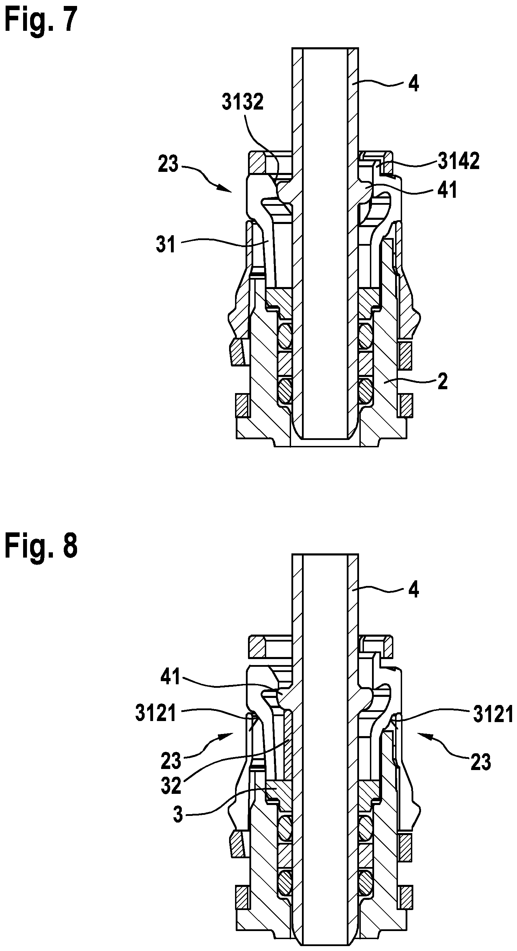

In Fig. 7 ist der gleiche Zustand der Fluidleitungskupplung 1 gezeigt, wie in der Fig. 6. Während der Sperrbund 41 des Kupplungsstutzens 4 an den Führungsstegen 3142 vorbei gleitet, stößt er an die Abschrägungen 3132. Dadurch sind die betroffenen Verriegelungsstege 31 weiter nach Außen durch die Öffnungen 23 der Kupplungsmuffe 2 verdrängbar.

Beim weiteren Einschieben stellt sich ein Zustand ein, der in Fig. 8 dargestellt ist. Der Sperrbund 41 stößt nun gegen Anschläge 32 des Verriegelungselements 3 und schiebt dieses axial vor sich her. Dabei sind die schrägen Übergangsflächen 3121 über die Kanten der Öffnungen 23 zwangsgeführt und dadurch nach Innen verschiebbar.

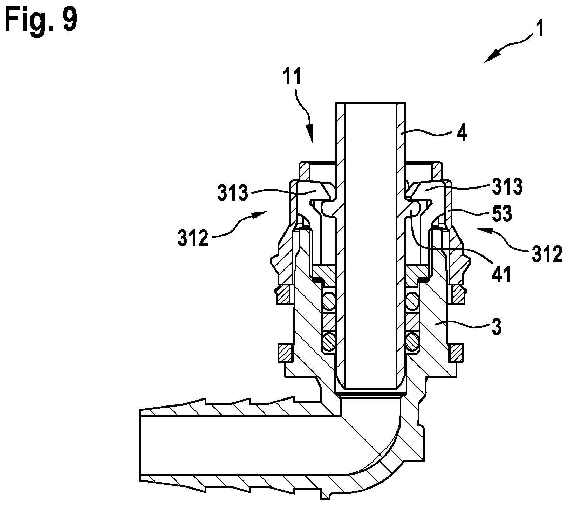

In Fig. 9 ist der verriegelte Zustand der Fluidleitungskupplung 1 gezeigt. Die Sperrnasen 313 und 314 greifen nun hinter dem Sperrbund 41 soweit ins Innere der Kupplungsmuffe 3, dass der Kupplungsstutzen 4 verriegelt ist. Gleichzeitig ist das Sperrteil 53 durch das Federteil 52 über die Betätigungs/Signalflächen 312 verschoben. Dadurch ist es nicht mehr möglich, diese nach Außen zu verschieben. Die Kupplung 1 ist nun fest verriegelt.

Bei Belastung der Kupplung 1 durch Fluiddruck ist der Kupplungsstutzen um einen geringen Weg in Richtung auf die Einstecköffnung 11 verschiebbar. Das Verriegelungselement 3 stützt sich dabei an den der Einstecköffnung 11 zugewandten Kanten der Öffnungen 23 an der Kupplungsmuffe 3 ab, so dass ein Herausgleiten des Kupplungsstutzens 4 nicht mehr möglich ist.

Dadurch, dass die farblich abweichenden Betätigungs/Signalflächen 312 vom Sperrteil 53 verdeckt sind, ist eine optische Kontrolle, insbesondere mit einer Kamera möglich.

Zum Lösen der Kupplung ist das Sperrteil 53 manuell in Richtung auf das Basisteil 51 verschiebbar. Die Betätigungs/Signalflächen 312 sind dadurch freigebbar und die Verriegelungsarme nach Außen verschiebbar. Durch Ziehen am Kupplungsstutzen 4 ist die Kupplung 1 wieder lösbar.

### Bezugszeichenliste

### (Teil der Beschreibung)

- 1: Fluidleitungskupplung, Kupplung
- 11: Einstecköffnung der Kupplung 1
- 2: Kupplungsmuffe
- 21: O-Ring-Dichtungen
- 22: Wand der Kupplungsmuffe 2
- 23: Öffungen in der Wand 22
- 24: Anschlussbereich der Kupplungsmuffe 2
- 25: Anschlagbund der Kupplungsmuffe 2
- 3: Verriegelungselement
- 31: Verriegelungsarme
- 311: Enden der Verriegelungsarmen
- 312: Betätigungs/signalfläche
- 3121: Übergangsflächen
- 313,314: Sperrnasen
- 3131: Endflächen der Sperrnasen 313
- 3132: Abschrägungen der Sperrnasen 313
- 3141: Innere Enden der Sperrnasen 314
- 3142: Führungsstege an den Sperrnasen 314
- 3143: axiale Endflächen der Sperrnasen 314
- 3144: Sperrstege an den Sperrnasen 314
- 32: Längsanschläge in der Kupplungsmuffe 2
- 4: Kupplungsstutzen
- 41: Sperrbund des Kupplungsstutzens 4
- 5: Sperrring
- 51: Basisteil des Sperrrings 5
- 52: Federteil des Sperrrings5
- 53: Sperrteil des Sperrrings 5
- 6: O-Ring-Dichtung

## Patentansprüche

1. Reversibel lösbare Fluidleitungskupplung (1), mindestens aufweisend eine Kupplungsmuffe (2), ein Verriegelungselement (3) und einen Kupplungsstutzen (4) mit einem Sperrbund (41), wobei
- die Kupplungsmuffe (2) einen von einer ersten, zum Einstecken des Kupplungsstutzens (4) vorgesehenen Einstecköffnung (11) axial nach Außen weisenden, von der Einstecköffnung (11) beabstandeten Anschlagbund (25) aufweist,
- die Kupplungsmuffe (2) in ihrer Außenwand (22) eine vorbestimmte Anzahl an Öffnungen (23) aufweist und
- das Verriegelungselement (3) im Inneren der Kupplungsmuffe (2) axial verschiebbar angeordnet ist und eine zur Anzahl der Öffnungen (23) in der Kupplungsmuffe (2) korrespondierende Anzahl an federnden Verriegelungsarmen (31) aufweist,
- wobei die Verriegelungsarme (31) auf dem Umfang des Verriegelungselementes (3) verteilt sind und sich in axialer Richtung erstrecken und an ihren axialen Enden (311) nach radial auswärts weisende Betätigungs/Signalflächen (312) aufweisen und
- die Betätigungs/Signalflächen (312) in Form und Lage mit den Öffnungen (23) in der Kupplungsmuffe (2) korrespondieren und federnd durch die Öffnungen (23) der Kupplungsmuffe (2) radial nach außen aus der Kupplungsmuffe (2) herausragen,
- die Fluidleitungskupplung (1) einen die Kupplungsmuffe (2) umgreifenden Sperrring (5) aufweist, wobei der Sperrring (5) ein Basisteil (51), ein Federteil (52) und ein Sperrteil (53) aufweist und Basisteil (51) und Sperrteil (53) mittels des Federteils (52) in axialer Richtung federnd veränderbar beabstandet sind und
- der Sperrring (5) einen Innendurchmesser aufweist, der mit geringem Spiel über den Außenumfang der Kupplungsmuffe (2) schiebbar ist,
- wobei das Spiel zwischen Kupplungsmuffe (2) und Sperrteil (53) so bemessen ist, dass das Sperrteil (53) nicht über die aus den Öffnungen (23) der Kupplungsmuffe (2) herausragenden Betätigungs/Signalflächen (312) schiebbar ist,
- die Betätigungs/Signalflächen (312) eine von dem Sperrteil (53) des Sperrrings (5) abweichende Farbe aufweisen,
- wobei der Sperrring (5) in vormontiertem Zustand so auf der Kupplungsmuffe (2) angeordnet ist, dass sich das Basisteil (51) an dem Anschlagbund (25) der Kupplungsmuffe (2) abstützt, das Sperrteil (53) sich gegen die aus den Öffnungen (23) der Kupplungsmuffe (2) herausragenden Betätigungs/Signalflächen (312) abstützt und das Federteil (52) axial zusammengeschoben ist, wodurch zwischen Basisteil (51) und Sperrteil (53) eine axiale Federkraft wirksam ist und
- die Betätigungs/Signalflächen (312) bei eingeschobenem und verriegeltem Kupplungsstutzen (4) in Richtung auf das Innere der Kupplungsmuffe (2) soweit verschoben sind, dass sie nicht mehr aus den Öffnungen (23) der Kupplungsmuffe (2) herausragen, aber noch durch die Wandung (22) der Kupplungsmuffe (2) an einem axialen Hinausgleiten aus der Kupplungsmuffe (2) gehindert sind, so dass das Sperrteil (53) des Sperrrings (5) freigegeben ist und durch die Federkraft des Federteils (52) des Sperrrings (5) in Richtung auf die Einstecköffnung (11) über die Betätigungs/Signalflächen (312) hinweg verschoben ist, so dass die Betätigungs/Signalflächen (312) nicht mehr sichtbar sind und auch nicht mehr aus den Öffnungen (23) in der Kupplungsmuffe (2) nach radial außen verschiebbar sind.

2. Fluidleitungskupplung (1) nach Anspruch 1, **dadurch gekennzeichnet, dass** der Übergang von den Verriegelungsarmen (31) zu den radial auswärts gerichteten Betätigungs/Signalflächen (312) mindestens teilweise eine Schräge (3121) aufweist.

3. Fluidleitungskupplung (1) nach Anspruch 2, **dadurch gekennzeichnet, dass** die Verriegelungsarme (31) an ihren axialen Enden den Betätigungs/Signalflächen (312) gegenüberliegend nach radial Innen weisende Sperrnasen (313, 314) aufweisen.

4. Fluidleitungskupplung (1) nach Anspruch 3, **dadurch gekennzeichnet, dass** eine vorbestimmte Anzahl von Verriegelungsarmen (31) an ihren Sperrnasen (313, 314) in axialer Richtung angeordnete Einschubhilfen in Form von Abschrägungen (3132) aufweist, und diese Sperrnasen (313, 314) so weit radial in das Innere der Kupplungsmuffe (2) ragen, dass beim Einschieben des Kupplungsstutzens (4) der Sperrbund (41) gegen die Abschrägungen (3132) stößt und damit die Sperrnasen (313, 314) nach radial außen verschiebbar sind.

5. Fluidleitungskupplung (1) nach Anspruch 4, **dadurch gekennzeichnet, dass** die Verriegelungsarme (31) ohne Einschubhilfen an den radialen Enden (3141) ihrer Sperrnasen (314) jeweils einen Führungssteg (3142) aufweisen, der sich in axialer Richtung erstreckt.

6. Fluidleitungskupplung (1) nach Anspruch 5, **dadurch gekennzeichnet, dass** die Führungsstege (3142) aufweisenden Verriegelungsarme (31) jeweils axial in Richtung auf die Einstecköffnung (11) der Kupplung (1) weisend, radial von den Führungsstegen (3142) beabstandet, Sperrstege (3144) aufweisen, wobei der Abstand zwischen jeweiligem Führungssteg (3142) und Sperrsteg (3144) so bemessen ist, dass die Wand (22) der Kupplungsmuffe (2) im Bereich der Öffnungen (23) zwischen Führungssteg (3142) und Sperrsteg (3144) eingreifen kann.

7. Fluidleitungskupplung (1) nach mindestens einem der vorstehenden Ansprüche, **dadurch gekennzeichnet, dass** das Verriegelungselement (3) im Inneren axial ausgerichtete Längsanschläge (32) aufweist.

8. Fluidleitungskupplung (1) nach mindestens einem der vorstehenden Ansprüche, **dadurch gekennzeichnet, dass** alle Bauteile der Fluidleitungskupplung (1) aus Kunststoff ausgebildet sind.

## Claims

1. Reversibly detachable fluid line coupling (1), at least having a coupling sleeve (2), a locking element (3) and a coupling plug (4) with a locking collar (41), wherein
- the coupling sleeve (2) has a support collar (25) which faces axially outwards from a first insertion opening (11), which is provided for the insertion of the coupling connector (4), and is spaced apart from the insertion opening (11),
- the coupling sleeve (2) has a predetermined number of openings (23) in its outer wall (22), and
- the locking element (3) is arranged axially displaceably inside the coupling sleeve (2) and has a number of resilient locking arms (31) that corresponds to the number of openings (23) in the coupling sleeve (2),
- the locking arms (31) being distributed on the circumference of the locking element (3) and extending in the axial direction and having actuating/signalling surfaces (312) facing radially outwards at their axial ends (311), and
- the actuating/signalling surfaces (312) correspond in shape and position to the openings (23) in the coupling sleeve (2) and protrude resiliently through the openings (23) in the coupling sleeve (2) radially outwards from the coupling sleeve (2),
- the fluid line coupling (1) has a blocking ring (5) enclosing the coupling sleeve (2), the blocking ring (5) having a base part (51), a spring part (52) and a blocking part (53), and the base part (51) and blocking part (53) being resiliently variably spaced apart in the axial direction by means of the spring part (52), and
- the blocking ring (5) has an inner diameter that can be slid over the outer circumference of the coupling sleeve (2) with little play,
- the play between the coupling sleeve (2) and the blocking part (53) being dimensioned in such a way that the blocking part (53) cannot be slid over the actuating/signalling surfaces (312) protruding from the openings (23) in the coupling sleeve (2),
- the actuating/signalling surfaces (312) have a different colour from the blocking part (53) of the blocking ring (5),
- the blocking ring (5) being arranged in the preassembled state on the coupling sleeve (2) in such a way that the base part (51) is supported on the support collar (25) of the coupling sleeve (2), the blocking part (53) is supported against the actuating/signalling surfaces (312) protruding from the openings (23) in the coupling sleeve (2), and the spring part (52) is pushed together axially, as a result of which an axial spring force is effective between the base part (51) and blocking part (53), and
- when the coupling connector (4) is pushed in and locked, the actuating/signalling surfaces (312) are displaced in the direction of the interior of the coupling sleeve (2) to such an extent that they no longer protrude from the openings (23) in the coupling sleeve (2), but are still prevented from sliding out of the coupling sleeve (2) axially by the wall (22) of the coupling sleeve (2), and therefore the blocking part (53) of the blocking ring (5) is released and is displaced beyond the actuating/signalling surfaces (312) in the direction of the push-in opening (11) by the spring force of the spring part (52) of the blocking ring (5) such that the actuating/signalling surfaces (312) are no longer visible and are also no longer displaceable radially outwards from the openings (23) in the coupling sleeve (2).

2. Fluid line coupling (1) according to Claim 1, **characterized in that** the transition from the locking arms (31) to the radially outwardly directed actuating/signalling surfaces (312) at least partially has a slope (3121).

3. Fluid line coupling (1) according to Claim 2, **characterized in that** the locking arms (31) have radially inwardly facing blocking lugs (313, 314) at their axial ends opposite the actuating/signalling surfaces (312).

4. Fluid line coupling (1) according to Claim 3, **characterized in that** a predetermined number of locking arms (31) has insertion aids in the form of bevels (3132) arranged in the axial direction on their blocking lugs (313, 314), and said blocking lugs (313, 314) protrude radially into the interior of the coupling sleeve (2) to such an extent that, when the coupling connector (4) is pushed in, the blocking collar (41) butts against the bevels (3132) and therefore the blocking lugs (313, 314) are displaceable radially outwards.

5. Fluid line coupling (1) according to Claim 4, **characterized in that** the locking arms (31) not having insertion aids at the radial ends (3141) of their blocking lugs (314) each have a guide web (3142) which extends in the axial direction.

6. Fluid line coupling (1) according to Claim 5, **characterized in that** the locking arms (31) having guide webs (3142) each have blocking webs (3144) pointing axially in the direction of the insertion opening (11) in the coupling (1) and spaced radially from the guide webs (3142), the distance between the respective guide web (3142) and blocking web (3144) being dimensioned such that the wall (22) of the coupling sleeve (2) can engage in the region of the openings (23) between the guide web (3142) and the blocking web (3144).

7. Fluid line coupling (1) according to at least one of the preceding claims, **characterized in that** the locking element (3) has axially aligned longitudinal stops (32) in the interior.

8. Fluid line coupling (1) according to at least one of the preceding claims, **characterized in that** all the components of the fluid line coupling (1) are formed from plastic.

## Revendications

1. Accouplement de conduite de fluide (1) détachable de manière réversible, présentant au moins un manchon d'accouplement (2), un élément de verrouillage (3) et un embout d'accouplement (4) avec un collet de blocage (41),
- le manchon d'accouplement (2) présentant un collet de butée (25) orienté axialement vers l'extérieur à partir d'une première ouverture d'insertion (11) prévue pour l'insertion de l'embout d'accouplement (4), espacé de l'ouverture d'insertion (11),
- le manchon d'accouplement (2) présentant un nombre prédéterminé d'ouvertures (23) dans sa paroi extérieure (22), et
- l'élément de verrouillage (3) étant agencé de manière à pouvoir se déplacer axialement à l'intérieur du manchon d'accouplement (2) et présentant un nombre de bras de verrouillage élastiques (31) correspondant au nombre d'ouvertures (23) dans le manchon d'accouplement (2),
- les bras de verrouillage (31) étant répartis sur la circonférence de l'élément de verrouillage (3) et s'étendant dans la direction axiale et présentant des surfaces d'actionnement/de signalisation (312) dirigées radialement vers l'extérieur au niveau de leurs extrémités axiales (311) et
- les surfaces d'actionnement/de signalisation (312) correspondant en forme et en position aux ouvertures (23) dans le manchon d'accouplement (2) et dépassant de manière élastique radialement vers l'extérieur du manchon d'accouplement (2) à travers les ouvertures (23) du manchon d'accouplement (2),
l'accouplement de conduite de fluide (1) présentant une bague de blocage (5) entourant le manchon d'accouplement (2), la bague de blocage (5) présentant une partie de base (51), une partie élastique (52) et une partie de blocage (53), et la partie de base (51) et la partie de blocage (53) étant espacées de manière élastiquement variable dans la direction axiale au moyen de la partie élastique (52), et
- la bague de blocage (5) présentant un diamètre intérieur qui peut être glissé avec un faible jeu sur la circonférence extérieure du manchon d'accouplement (2),
- le jeu entre le manchon d'accouplement (2) et la partie de blocage (53) étant dimensionné de telle sorte que la partie de blocage (53) ne peut pas être glissée sur les surfaces d'actionnement/de signalisation (312) dépassant des ouvertures (23) du manchon d'accouplement (2),
- les surfaces d'actionnement/de signalisation (312) présentant une couleur différente de la partie de blocage (53) de la bague de blocage (5),
- la bague de blocage (5) étant agencée à l'état prémonté sur le manchon d'accouplement (2) de telle sorte que la partie de base (51) s'appuie sur le collet de butée (25) du manchon d'accouplement (2), la partie de blocage (53) s'appuie contre les surfaces d'actionnement/de signalisation (312) dépassant des ouvertures (23) du manchon d'accouplement (2) et la partie élastique (52) est comprimée axialement, une force élastique axiale agissant ainsi entre la partie de base (51) et la partie de blocage (53) et
- les surfaces d'actionnement/de signalisation (312), lorsque le manchon d'accouplement (4) est inséré et verrouillé, étant déplacées en direction de l'intérieur du manchon d'accouplement (2) jusqu'à ce qu'elles ne dépassent plus des ouvertures (23) du manchon d'accouplement (2), mais soient encore empêchées par la paroi (22) du manchon d'accouplement (2) de glisser axialement vers l'extérieur du manchon d'accouplement (2), de telle sorte que la partie de blocage (53) de la bague de blocage (5) est libérée et est déplacée par la force élastique de la partie élastique (52) de la bague de blocage (5) en direction de l'ouverture d'insertion (11) au-delà des surfaces d'actionnement/de signalisation (312), de telle sorte que les surfaces d'actionnement/de signalisation (312) ne sont plus visibles et ne peuvent plus non plus être déplacées radialement vers l'extérieur des ouvertures (23) dans le manchon d'accouplement (2).

2. Accouplement de conduite de fluide (1) selon la revendication 1, **caractérisé en ce que** la transition entre les bras de verrouillage (31) et les surfaces d'actionnement/de signalisation (312) orientées radialement vers l'extérieur présente au moins partiellement un biais (3121).

3. Accouplement de conduite de fluide (1) selon la revendication 2, **caractérisé en ce que** les bras de verrouillage (31) présentent, à leurs extrémités axiales, des ergots de blocage (313, 314) dirigés radialement vers l'intérieur, faisant face aux surfaces d'actionnement/de signalisation (312).

4. Accouplement de conduite de fluide (1) selon la revendication 3, **caractérisé en ce qu'**un nombre prédéterminé de bras de verrouillage (31) présentent sur leurs ergots de blocage (313, 314) des aides à l'insertion agencées dans la direction axiale sous forme de chanfreins (3132), et ces ergots de blocage (313, 314) font saillie radialement à l'intérieur du manchon d'accouplement (2) jusqu'à ce que, lors de l'insertion de l'embout d'accouplement (4), le collet de blocage (41) vienne buter contre les chanfreins (3132) et que les ergots de blocage (313, 314) peuvent ainsi être déplacés radialement vers l'extérieur.

5. Accouplement de conduite de fluide (1) selon la revendication 4, **caractérisé en ce que** les bras de verrouillage (31) sans aide à l'insertion présentent chacun, aux extrémités radiales (3141) de leurs ergots de blocage (314), une nervure de guidage (3142) qui s'étend dans la direction axiale.

6. Accouplement de conduite de fluide (1) selon la revendication 5, **caractérisé en ce que** les bras de verrouillage (31) présentant des nervures de guidage (3142) présentent respectivement des nervures de blocage (3144) dirigées axialement en direction de l'ouverture d'insertion (11) de l'accouplement (1), espacées radialement des nervures de guidage (3142), la distance entre la nervure de guidage (3142) respective et la nervure de blocage (3144) respective étant dimensionnée de telle sorte que la paroi (22) du manchon d'accouplement (2) peut s'engager dans la zone des ouvertures (23) entre la nervure de guidage (3142) et la nervure de blocage (3144).

7. Accouplement de conduite de fluide (1) selon au moins l'une quelconque des revendications précédentes, **caractérisé en ce que** l'élément de verrouillage (3) présente à l'intérieur des butées longitudinales (32) orientées axialement.

8. Accouplement de conduite de fluide (1) selon au moins l'une quelconque des revendications précédentes, **caractérisé en ce que** tous les composants de l'accouplement de conduite de fluide (1) sont réalisés en matière plastique.
